# EUROPÄISCHE PATENTANMELDUNG

(11) **EP 4 241 553 A2**
(43) Veröffentlichungstag der Anmeldung: **13.09.2023**
(21) Anmeldenummer: 23152694.8
(22) Anmeldetag: 20.01.2023
(51) Int. Cl.: A01D 34/86

(54) **AUSLEGER-ARBEITSGERÄT SOWIE VERFAHREN ZUM HERUMFÜHREN EINES ARBEITSKOPFES DES AUSLEGER-ARBEITSGERÄTES UM EIN HINDERNIS**

(30) Priorität: 24.01.2022 DE 102022101571
(71) Anmelder: MULAG FAHRZEUGWERK Heinz Wössner GmbH & CO. KG, 77728 Oppenau (DE)
(72) Erfinder: Weiß, Lukas, 77866 Rheinau (DE)
(74) Vertreter: Weickmann & Weickmann PartmbB

(57) **Zusammenfassung**

Um ein Hindernis (H) von einem vorbeifahrenden Arbeitskopf (2, 2a) möglichst eng umfahren zu können, wird erfindungsgemäß die Querposition des Hindernisses (H) relativ zu dem sich nähernden Arbeitskopf (2, 2a) ermittelt, insbesondere mit einer Taststange (51) durch Ermittlung von deren Schwenk-Geschwindigkeit (v51) relativ zur Fahrgeschwindigkeit (v10) des Trägerfahrzeuges (7). In Kenntnis der Querposition und der Fahrgeschwindigkeit wird dann Zeitpunkt, Zeitdauer und Schwenkwinkel der Auslenkbewegung des Arbeitskopfes (2, 2a) automatisch gesteuert, gegebenenfalls unter Nachführung eines äußeren Arbeitskopfes (2b) in Querrichtung (1) nahe an dem Hindernis (H) vorbei. Mittels Signalauswertung wird gegen die Taststange (51) drückender, elastischer Bewuchs von einem starren Hindernis (H) unterschieden, so dass die Taststange (51) ständig eingeschaltet und aktiviert bleiben kann.

## Beschreibung

### I. Anwendungsgebiet

Die Erfindung betrifft ein Ausleger-Arbeitsgerät, welches üblicherweise auf einem fahrbaren Träger-Fahrzeug befestigt wird.

### II. Technischer Hintergrund

Ein solches Ausleger-Arbeitsgerät besitzt einen, meist aus mehreren gelenkig miteinander verbundenen Armteilen bestehenden, Ausleger-Arm, dessen hinteres Ende an dem Träger-Fahrzeug befestigt werden kann und der am gegenüberliegenden vorderen Ende einen Arbeitskopf trägt.

Beispielsweise kann der Arbeitskopf ein Mähkopf sein, in dem eine Messerwelle horizontal rotiert oder mehrere um aufrechte Achsen rotierende Messer nebeneinander rotieren.

Üblicherweise wird der Arbeitskopf neben dem Träger-Fahrzeug mit seiner größten Erstreckungsrichtung quer zur Fahrtrichtung des Träger-Fahrzeuges gehalten, während das Träger-Fahrzeug vorwärtsfährt, sodass mit dem Arbeitsgerät beispielsweise der Untergrund bearbeitet werden kann, etwa gemäht oder gereinigt werden kann.

Dabei erstreckt sich bei einer Bauform der Arbeitskopf mit seiner größten Erstreckungsrichtung vom Befestigungspunkt am vorderen Arm-Ende des Ausleger-Armes aus nach außen, also vom Träger-Fahrzeug weg, indem der Arbeitskopf an einem seiner in Querrichtung weisenden Enden, dem inneren Ende, mit dem Ausleger-Arm verbunden ist.

Der Arbeitskopf kann in der Regel gegenüber dem vorderen Ende des Ausleger-Armes gesteuert um eine aufrechte Achse verschwenkt werden, manchmal zusätzlich auch um eine etwa in Fahrtrichtung horizontal verlaufende zweite Schwenkachse, um den Arbeitskopf an z.B. eine schräge Böschung neben der Fahrbahn, auf dem sich das Träger-Fahrzeug bewegt, parallel anpassen zu können.

Ein typisches Problem - gerade bei Mähköpfen zum Freimähen des Bewuchses neben dem Rand einer Fahrbahn - sind im Arbeitsbereich des Arbeitskopfes auftretende Hindernisse, etwa ein Straßenschild, welches im Abstand neben der Fahrbahn aufragt und welches von dem oben beschriebenen Arbeitskopf oder Mähkopf auf der Innenseite, also der zum Träger-Fahrzeug hinweisenden Seite, umfahren werden muss, wobei dabei möglichst wenig ungemähte Fläche übrigbleiben soll.

In diesem Zusammenhang ist es bekannt, als Hindernis-Einheit, also zum Erkennen eines herannahenden Hindernisses, an der Vorderseite eines solchen Arbeitskopfes eine etwa parallel zur Haupterstreckungsrichtung des Arbeitskopfes verlaufende Taststange gelenkig am Arbeitskopf anzuordnen, die z.B. mittels einer Feder in die nach vorn ausgeschwenkte, etwa parallele Lage zum Arbeitskopf vorgespannt ist und durch Anstoßen an einem Hindernis verschwenkt wird, was von einem Taster detektiert wird, der nach Auslösen den Arbeitskopf um die aufrechte Achse im Bereich seiner Verbindung zum Ausleger-Arm nach hinten schwenkt, wodurch er am Hindernis vorbei gefahren werden kann. Sobald die Taststange nicht mehr aus ihrer Ausgangslage verschwenkt ist, wird der Arbeitskopf wieder nach vorn in die etwa in Querrichtung liegende Ausgangsstellung zurückgeschwenkt.

Bei dieser Lösung ist die Schwenkachse der Taststange nahe an der Verbindungsstelle zwischen Ausleger-Arm und Arbeitskopf angeordnet, vorzugsweise sogar außerhalb des Arbeitsbereiches des Arbeitskopfes, um jedes im Arbeitsbereich, also der Arbeitsbreite, sich annäherndes Hindernis detektieren zu können.

Dabei musste bisher das automatische Verschwenken durch Aktivieren des Schwenksensors für die Taststange bei Annäherung an ein Hindernis jeweils manuell aktiviert werden und nach dem Umfahren des Hindernisses wieder deaktiviert werden, um zu verhindern, dass nicht nur starre Hindernisse wie ein Verkehrsschild, sondern auch elastische wie hoch, bis zur Taststange aufragendes, Gras oder auch dünne elastische Stämme von kleinen Büschen und Ähnliches zu einem Einklappen des Arbeitskopfes führen.

Arbeits-Fahrzeuge können nicht nur einen Ausleger-Arm mit einem Arbeitskopf tragen, sondern zwei Ausleger-Arme mit je einem Arbeitskopf, beispielsweise Mähkopf, um eine breitere Spur neben dem Träger-Fahrzeug bearbeiten zu können. Am Beispiel des Mähkopfes werden die beiden Mähköpfe dann so geführt, dass der weiter innen liegende bei einem Hindernis auf dessen Innenseite vorbeigeführt wird, der weiter außen fahrende äußere Mähkopf dagegen auf der Außenseite vorbeigeführt wird, wobei dessen Auslegerarm das Hindernis übergreifen können muss.

Die Spuren der beiden Mähköpfe überlappen dabei etwas, um keinen ungemähten Streifen dazwischen entstehen zu lassen.

Dies führt allerdings dazu, dass bei einem wegen eines Hindernisses einklappenden inneren Mähkopf seitlich außerhalb des Hindernisses dann ein relativ großer ungemähter Bereich bis zur Innenkante der Spur des äußeren Mähkopfes übrigbleibt, was in der Regel manuelle Nachbearbeitung erfordert.

### III. Darstellung der Erfindung

### a) Technische Aufgabe

Es ist daher die Aufgabe gemäß der Erfindung, ein Ausleger-Arbeitsgerät und ein Steuerungsverfahren für dessen Arbeitskopf, insbesondere Mähkopf zur Verfügung zu stellen, welches den einen oder die beiden Mähköpfe möglichst nah an dem starren Hindernis vorbeiführt, sodass der ungemähte Bereich um das Hindernis herum so klein ist, dass auf manuelles Nacharbeiten verzichtet werden kann.

Ferner soll der manuelle Steuerungsaufwand für den Bediener des Ausleger-Arbeitsgerätes, der meist gleichzeitig der Fahrer des Träger-Fahrzeuges ist, minimiert werden.

### b) Lösung der Aufgabe

Diese Aufgabe wird durch die Merkmale der Ansprüche 1, 14 und 15 gelöst. Vorteilhafte Ausführungsformen ergeben sich aus den Unteransprüchen.

Hinsichtlich des Ausleger-Arbeitsgerätes umfasst dieses zunächst einmal den Auslegerarm selbst, der meist aus mehreren gelenkig miteinander verbundenen Armteilen besteht und dessen hinteres Ende zum Befestigen an einem Trägerfahrzeug ausgebildet ist.

Darüber hinaus besitzt der Auslegerarm an seinem vorderen Ende ein Armende, welches gegenüber dem Rest des Auslegerarms mittels eines Z-Gelenkes um eine als Z-Achse bezeichnete, aufrecht stehende, Achse verschwenkt werden kann, und an dem der Arbeitskopf mittels seines dem Auslegerarm zugewandten Kopfendes befestigt werden kann, z.B. durch Verschraubung oder Verrastung.

Zusätzlich kann zwischen Auslegerarm und Arbeitskopf ein X-Gelenk vorhanden sein, mittels dessen der Arbeitskopf um eine quer, insbesondere lotrecht, zur Z-Achse verlaufende X-Achse verschwenkbar ist, die vorzugsweise in Fahrtrichtung des Trägerfahrzeuges etwa horizontal verläuft. Das X-Gelenk kann vor oder hinter - in Verlaufsrichtung des Auslegerarmes - des Z-Gelenkes angeordnet oder mit diesem funktionsvereinigt sein.

Erfindungsgemäß ist die Hindernis-Einheit so ausgebildet, dass sie in der Lage ist, nicht nur prinzipiell das Annähern und insbesondere Kontaktieren eines Hindernisses am Arbeitskopf zu ermitteln, sondern auch dessen Lage in Querrichtung relativ zu der Hindernis-Einheit, die jedoch in Querrichtung an einer festen Querposition am Arbeitskopf angeordnet ist, und somit relativ zum Arbeitskopf.

Die Steuerung soll erfindungsgemäß so ausgebildet sein, dass sie in der Lage ist, in Kenntnis der ermittelten Querposition als auch der Vorwärts-Geschwindigkeit des Arbeitskopfes den Arbeitskopf sehr nahe auf der Innenseite um das Hindernis herumzuführen, durch gezielte Steuerung der Einklapp-Bewegung des Arbeitskopfes, nachdem ein Hindernis detektiert wurde.

Dabei soll die Hindernis-Einheit insbesondere in der Lage sein zu ermitteln, ob es sich um starres und damit zu umfahrendes Hindernis handelt oder um ein so elastisches Hindernis, dass es nicht umfahren werden muss, sondern der Arbeitskopf darüber hinweg geführt werden kann.

Dies hat den Vorteil, dass hohes Gras, oder niedrige Büsche, die als ein solches elastisches Hindernis vorkommen, wie beabsichtigt durch Überfahren mit dem Mähkopf abgemäht werden und der Mähkopf nicht eingeklappt wird.

Bei der Hindernis-Einheit kann es sich um eine kontaktierend arbeitende Hindernis-Einheit handeln, bei der etwa die bereits bekannte Taststange mit zugehörigem Taster Verwendung finden kann, oder auch eine berührungslos arbeitende Hindernis-Einheit wie etwa ein optischer Sensor oder eine andere Art von elektromagnetischen Wellen aussendender Sensor, der die vom Hindernis reflektierten Wellen empfängt und damit das Hindernis und dessen Querposition und insbesondere sogar dessen Dicke quer zur Fahrtrichtung detektiert, bevor der Arbeitskopf das Hindernis erreicht.

Da im rauen Arbeitseinsatz jedoch nach wie vor mechanische Lösungen bevorzugt werden, wird im Folgenden eine kontaktierend arbeitende Hindernis-Einheit weitergebildet, die die bekannte Taststange aufweist sowie einen Sensor zum Ermitteln der Schwenkbewegung der Taststange.

Ebenso wäre eine Taststange möglich, die nicht um eine aufrechte Achse verschwenkt wird, sondern beidseits am Arbeitskopf befestigt ist und relativ zu diesem entgegen der Fahrtrichtung eingeschoben oder nach unten oder oben geschwenkt werden kann, was wiederum mittels eines Sensors detektiert werden kann.

Dieser Sensor kann, insbesondere bei einer um eine aufrechte Achse schwenkbaren Taststange - wie bisher genutzt - ein einfacher Taster sein, der bei einem Eindrücken über ein bestimmtes Maß hinaus durch die Taststange ein Signal abgibt, wobei dann jedoch entweder zwei solche Taster mit jeweils nur einer einzigen Schaltschwelle benötigt werden oder ein Taster, der an zwei unterschiedlich stark eingerückten Einrück-Stellungen ein Signal abgibt. Auch jeder andere Sensor und jedes andere Sensor-Prinzip kann verwendet werden, um die Geschwindigkeit der Drehung der Taststange um deren Schwenkachse, also letztendlich die Winkel-Geschwindigkeit, zu bestimmen.

Denn das Ziel besteht in diesem Fall darin, mindestens zwei von der Ausgangsstellung sowie zueinander unterschiedliche Schwenklagen der Taststange zu detektieren.

Bevorzugt ist ein Drehwinkel-Sensor, der an oder in der Schwenkachse angeordnet sein kann und das Verschwenken der Taststange detektiert, vorzugsweise in einem Weg-Zeit-Diagramm aufnimmt.

Die Querposition des Hindernisses relativ zur Taststange und damit dem Arbeitskopf kann ermittelt werden, da bei gleichbleibender Vorwärts-Geschwindigkeit des Arbeitskopfes nach Kontaktieren des Hindernisses die Schwenk-Bewegung der Taststange umso schneller erfolgt, je näher sich in Querrichtung das Hindernis an der aufrechten Schwenkachse der Taststange befindet.

Diese qualitative Erkenntnis kann in eine konkrete Querposition umgerechnet werden, wenn man die Vorwärts-Geschwindigkeit des Arbeitskopfes dabei kennt.

Denn abhängig von dieser Vorwärts-Geschwindigkeit und der Hebellänge zwischen aufrechter Achse und Hindernis ergibt sich eine berechenbare Schwenk-Geschwindigkeit entgegen der Fahrtrichtung.

Ob es sich um ein starkes oder ein elastisches Hindernis handelt, kann ermittelt werden aus der Beschleunigung der Auslenkbewegung der Taststange:
Bei einem sehr starren Hindernis wird die Taststange zunächst sehr schnell beschleunigt, aber ihre weitere Bewegungs-Geschwindigkeit danach bleibt im Wesentlichen konstant und ist abhängig der Querposition des Hindernisses, also dem Abstand zur aufrechten Schwenkachse. Bei einem elastischen Hindernis nimmt die Beschleunigung der Taststange über einen längeren Zeitraum zu als beim starren Hindernis und geht erst dann in eine etwa konstante Bewegungs-Geschwindigkeit über.

Ferner sollte ein Kanten-Sensor vorhanden sein, der in der Lage ist, insbesondere berührungslos, die Kante der Fahrbahn oder eine Markierung entlang der Fahrbahn oder ein anderes, den Verlauf der Kante der Fahrbahn repräsentierendes, optisches Merkmal abzutasten, der auch mit der Steuerung datentechnisch verbunden ist, insbesondere um die Möglichkeit zu bieten, im Arbeitseinsatz das Trägerfahrzeug automatisch parallel zum Rand der Fahrbahn zu leiten.

Ob ein singuläres Hindernis mit einer begrenzten, kleinen Erstreckung in Querrichtung vorliegt, oder ein so genanntes flächiges Hindernis, welches sich über größere Bereiche in Querrichtung an der Taststange anliegt, lässt sich ermitteln etwa durch Zusatzmaßnahmen dahingehend, dass an mehreren Punkten entlang der Taststange in Querrichtung deren Biegebelastung im Einsatz ermittelt wird, beispielsweise mittels Dehnmess-Streifen:
Bei einem singulären Hindernis ist die Taststange lediglich vom Kontakt. Mit dem Hindernis aus in dem Bereich zur aufrechten Schwenkachse hin auf Biegung belastet, und zwar in diesem Bereich Fall etwa gleich hoch belastet, in dem anderen Bereich zum freien Ende der Taststange hin dagegen nicht.

Bei einem flächigen Hindernis dagegen nimmt die Belastung in dem belasteten Bereich vom radial inneren, also der aufrechten Schwenkachse benachbarten, Ende zum gegenüberliegenden Ende des belasteten Bereiches ab.

Auch aus anderen Details, die aus der Signalauswertung eines beispielsweise Drehwinkel-Sensors um die aufrechte Schwenkachse erzielt werden können, können solche Informationen exzerpiert werden.

Vorzugsweise ist die Schwenkachse außerhalb des Arbeitsbereiches des Arbeitskopfes angeordnet, um Hindernisse detektieren zu können, unabhängig davon, wo sie sich innerhalb des Arbeitsbereiches, also der Arbeitsbreite, des Arbeitskopfes befinden.

Vorzugsweise befindet sich die Schwenkachse am innenseitigen Ende des Arbeitskopfes, dort vorzugsweise beabstandet zum inneren Ende des Arbeitsbereiches.

Bevorzugt sollte die Steuerung auch so ausgebildet sein, dass sie in der Lage ist, aus den von der Hindernis-Einheit erhaltenen Daten zu ermitteln, ob es sich um ein starres Hindernis handelt, welches von dem Mähkopf umfahren werden muss, oder ein elastisches Hindernis, welches überfahren und bearbeitet, beispielsweise abgemäht, werden soll.

Ein Ausleger-Arbeitsgerät kann neben einem ersten Ausleger-Arm mit einem ersten Arbeitskopf, insbesondere Mähkopf, auch einen zweiten Ausleger-Arm mit einem daran befestigten zweiten Arbeitskopf, insbesondere Mähkopf umfassen, wobei im Arbeitseinsatz die beiden Arbeitsköpfe seitlich versetzt zueinander gehalten und gesteuert werden um beispielsweise beim Mähen eine etwa doppelt breite Spur mit einer Durchfahrt des Arbeits-Fahrzeuges erzielen zu können.

In diesem Fall sollte die Steuerung so ausgebildet sein, dass sie in der Lage ist, für das Steuern des zweiten und ggfs. eines weiteren dritten Arbeitskopfes die ermittelte Querposition des Hindernisses zur berücksichtigen und insbesondere den zweiten, typischerweise auf der Außenseite des Hindernisses vorbeifahrenden Arbeitskopf möglichst nah, insbesondere automatisch, an dieser Außenseite des Hindernisses vorbeizusteuern und dort ungemähte verbleibende Flächen zu minimieren.

Dies ergibt natürlich eine nicht gerade, sondern ebenfalls für eine kurze Strecke nach innen versetzte rechte, äußere Kante der zweiten Mäh-Spur, aber dies ist hinnehmbar.

Falls noch weiter außen ein dritter Mähkopf eines dritten Auslegerarmes am Ausleger-Arbeitsgerät vorhanden ist, muss dieser natürlich ebenfalls, vorzugsweise automatisch, an diese nach innen versetzte Außenkante der zweiten Mäh-Spur angepasst, also nachgesteuert, werden.

Dies reduziert den notwendigen Nachbearbeitungs-Aufwand erheblich.

### (Entkoppeln:)

Für die unabhängige Steuerung des innen fahrenden Arbeitskopfes sollte die Steuerung so ausgebildet sein, dass die automatische Nachführung des außen laufenden Arbeitskopfes gegenüber dem innen laufenden Arbeitskopf manuell abgeschaltet werden kann. Denn dadurch würde während dieser abgeschalteten Zeit der außen laufende Arbeitskopf samt seines Auslegerarmes seine Position zum Trägerfahrzeug zum Abschaltzeitpunkt beibehalten.

Dies ist für einige Arbeitssituationen sehr nützlich:
Wenn beispielsweise mit zwei Mähköpfen gleichzeitig, einerseits außerhalb einer Leitplanke, mit dem inneren Mähkopf innerhalb und zwischen den aufrechten Tragpfosten unter der Leitplanke gemäht wird, stellt das Ende der Leitplanke, an dem diese meist herabgezogen im Boden endet, dann kein Problem mehr dar.

Denn kurz vor Ende der Leitplanke kann die Entkopplung eingeschaltet werden und der innere Mähkopf rechtzeitig unter der Leitplanke heraus bewegt und auf der Innenseite des im Boden versinkenden Leitplanken-Endes vorbeigefahren und danach wieder in seine Ausgangsstellung nach außen verfahren oder verschwenkt werden, so dass sich die beiden Mähspuren wieder überlappen. da ja der äußere Mähkopf seine Einstellung zum Trägerfahrzeug beibehalten hätte.

### (Flipper-Betrieb:)

In einer speziellen Ausführungsform für ein Tandem-Arbeitsgerät mit zwei Arbeitsköpfen und Auslegerarmen kann an beiden Auslegerarmen jeweils ein mit einer Hindernis-Einheit und dementsprechend auch insbesondere mit einer Taststange mit Schwenk-Sensor ausgestatteter Arbeitskopf befestigt sein, wobei der außen laufende Arbeitsköpf mit seinem äußeren Ende und der innen laufende Arbeitskopf mit seinem inneren Ende an ihrem jeweiligen Auslegerarm gehalten sind.

Dadurch können beide Arbeitsköpfe nach Aktivieren ihrer Taststange verschwenkt und auf ihrer Seite am Hindernis vorbeigeführt werden, wodurch der Mähschatten, also die ungemäht verbleibende Fläche um das Hindernis herum, reduziert werden kann.

### (Zusatz-Mähwerk:)

In einer bevorzugten Bauform ist am im Arbeitseinsatz äußeren, also in der Regel rechten, Ende des Gehäuses des, insbesondere innen laufenden, Arbeitskopfes ein Zusatz-Mähwerk mit mindestens einem um eine aufrechte Achse rotierenden Messer vorhanden ist, welches außerhalb der Arbeitsbreite der horizontal liegenden Messerwelle dieses Mähkopfes angeordnet ist. Das etwa horizontal rotierende Messer kann beispielsweise am freien Ende eines um eine aufrechte Achse schwenkbaren und mittels Federkraft in Fahrtrichtung vorgespannten Schwingenarmes befestigt sein.

Dies ermöglicht es, insbesondere, wenn z.B. ein Leitplanken-Tragpfosten als Hindernis relativ weit außen die Taststange kontaktiert, diesen Mähkopf nicht gegenüber dem Auslegerarm nach hinten zu verschwenken, sondern quer nach innen zu versetzen, so dass das Hindernis in den Bereich des Zusatz-Mähwerkes gelangt und von diesem der Bewuchs um den Tragpfosten herum freigemäht wird.

Generell sollte die Hindernis-Einheit so ausgebildet sein, dass sie in der Lage ist, die Position des auftreffenden Hindernisses in Querrichtung relativ zum Trägerfahrzeug zu ermitteln.

Dies kann beispielsweise erreicht werden, indem zumindest in den Schwenk-Gelenken mit einer aufrechten Schwenkachse, insbesondere in allen Schwenk-Gelenken zwischen den einzelnen Armteilen sowie zwischen Auslegerarm und Trägerfahrzeug und zwischen Auslegerarm und dem daran gehaltenen Arbeitskopf Sensoren vorhanden sind, die die Schwenkstellung des Gelenkes detektieren und an die Steuerung melden.

Dadurch ist die Querposition von auftretenden Hindernissen nicht nur relativ zum Arbeitskopf, sondern auch relativ zum Trägerfahrzeug ermittelbar.

### (Kurvenfahrt:)

Da sich der innen laufende Arbeitskopf um ca. 2 - 3m vor der Front des Trägerfahrzeuges befindet, wandert ein immer gleich weit seitlich vom Straßenrand beabstandetes Hindernis wie der Tragpfosten einer Leitplanke relativ zum Trägerfahrzeug - und bei konstant relativ dazu eingestelltem Arbeitskampf auch relativ zum Arbeitskopf - nach außen, wenn - bei auf der rechten Fahrspur fahrenden Trägerfahrzeug - z.B. eine Rechtskurve beginnt und sich fortsetzt.

Um zu vermeiden, dass der z.B. Mähkopf dann weniger weit unter die Leitplanke hinein auftaucht, kann in diesem Fall des nach außen wandernden Kontaktpunktes der Mähkopf weiter nach außen verstellt werden, bis die Kurve zu Ende ist.

Eine selbstfahrende Arbeitsmaschine besteht üblicherweise aus einem Träger-Fahrzeug und einem daran befestigten Ausleger-Arbeitsgerät mit einem oder mehreren Ausleger-Armen, an deren freien Enden sich jeweils ein Arbeitskopf wie etwa ein Mähkopf befindet wobei die Steuerung des Ausleger-Arbeitsgerätes alle beweglichen Bauteile des Ausleger-Arbeitsgerätes steuert, insbesondere die Stellelement zwischen den einzelnen Armteilen der Ausleger-Arme und/oder zwischen Ausleger-Arm und Arbeitskopf und/oder zwischen Träger-Fahrzeug und Ausleger-Arm.

Erfindungsgemäß ist an zumindest einem Arbeitskopf eines solchen Arbeitsfahrzeuges eine Hindernis-Einheit vorhanden, wie sie zuvor beschrieben wurde.

Hinsichtlich des Verfahrens zum Herumführen des Arbeitskopfes auf der dem Träger-Fahrzeug zugewandten Innenseite um ein Hindernis wird die bestehende Aufgabe - insbesondere bei Verwendung eines Ausleger-Arbeitsgerätes oder eines Arbeits-Fahrzeuges wie zuvor beschrieben - dadurch gelöst, dass zunächst
- die Querposition des Hindernisses, insbesondere auch seine momentane Längs-Position zur Taststange und damit dem Arbeitskopf, ermittelt wird,
- als auch die Vorwärts-Geschwindigkeit des Arbeitskopfes ermittelt wird oder zur Verfügung gestellt wird, beispielsweise in Form der Fahrgeschwindigkeit des Trägerfahrzeuges durch die Steuerung des Trägerfahrzeuges, unter Berücksichtigung der gleichzeitigen Bewegungen des Arbeitskopfes.

Die Fahrgeschwindigkeit des Trägerfahrzeuges kann nicht nur von der FahrzeugSteuerung erhalten werden, sondern auch mittels eines separaten Sensors am Mähkopf selbst ermittelt werden, oder auch manuell in der Steuerung des Arbeitsgerätes vorgegeben werden, beispielsweise mit 3 km/h, die der Bediener anschließend als Vorgabe in den Tempomat des Trägerfahrzeuges eingibt.

Anschließend wird
- abhängig von diesen beiden Parametern und der Ausgangs-Schwenkstellung des Arbeitskopfes - für den Arbeitseinsatz, insbesondere den Mähbetrieb, ist eine Ausgangsstellung des Arbeitskopfes durch eine mittels Vorspannung erzielte Anlage an einem Anschlag des Auslegerarmes definiert, was insbesondere auch in der Steuerung des Ausleger-Arbeitsgerätes so hinterlegt ist - Zeitpunkt und/oder Zeitdauer des verschwenkten Zustandes und/oder Schwenkwinkel der Verschwenkung des Arbeitskopfes um die aufrechte Schwenkachse , also das Z-Gelenk, bestimmt,
- der Arbeitskopf in Kenntnis der Relativ-Position des Hindernisses durch Steuerung des Schwenkvorganges des Arbeitskopfes möglichst eng um das Hindernis herumgeführt wird und
- danach der Arbeitskopf wieder in seine Ausgangs-Schwenkstellung zurück verschwenkt.

Dabei wird das Verschwenken so gesteuert, dass die Taststange immer in Kontakt mit dem Hindernis bleibt, und das Zurückschwenken in die Ausgangsstellung erst erfolgt, wenn die Taststange durch das Hindernis nicht mehr ausgelenkt ist. Durch Kenntnis der Relativposition des Hindernisses zum Arbeitskopf kann dieser wesentlich enger um das Hindernis herumgeführt werden als durch eine immer gleiche, mittels der aktivierten Taststange ausgelöste Verschwenkung des Arbeitskopfes bis in eine vorgegebene ausgelenkte Schwenkstellung.

Dabei wird die Querposition des Hindernisses mittels einer am vorderen Ende des Arbeitskopfes schwenkbar um eine aufrechte Schwenkachse beweglich befestigten und sich in der Aufsicht betrachtet quer zur Fahrtrichtung erstreckenden Taststange ermittelt, indem
- die Geschwindigkeit der Schwenkbewegung der Taststange ab dem Kontaktieren des Hindernisses ermittelt wird und
- unter Berücksichtigung der Vorwärts-Geschwindigkeit des Arbeitskopfes
- daraus die Querposition ermittelt wird.

Dies ist aufgrund der geometrischen Zusammenhänge sehr einfach möglich, den mit zunehmendem Abstand des Kontaktpunktes des Hindernisses an der Taststange zu dessen Schwenkachse verschwenkt die Taststange - bei unterstellter gleicher Vorwärts-Geschwindigkeit des Arbeitskopfes und damit der Taststange - mit einer immer geringer werdenden Winkelgeschwindigkeit.

In Kenntnis der Vorwärts-Geschwindigkeit und des momentanen Auslenkungswinkels der Taststange ist damit auch der Abstand des Hindernisses in VorwärtsRichtung also in Fahrtrichtung, zum Gehäuse des Arbeitskopfes bekannt oder berechenbar.

Damit kann berechnet werden, bei welcher Vorwärts-Position, also zu welchem Zeitpunkt, der Arbeitskopf wie stark um seine aufrechte Achse gegenüber dem Auslegerarm verschwenkt sein muss, um zunächst bis möglichst nahe an das Hindernis heran zu gelangen und dann mit möglichst geringem Abstand auf der Innenseite um das Hindernis herumgeführt zu werden.

Dabei kann als Vorwärts-Geschwindigkeit entweder nur die Fahrgeschwindigkeit des Trägerfahrzeuges festgelegt werden oder zusätzlich dabei die zum Zeitpunkt der Ermittlung der Vorwärts-Geschwindigkeit stattfindende Bewegung des Arbeitskopfes in oder entgegen der Fahrtrichtung relativ zum Trägerfahrzeug mitberücksichtigt werden.

Die letztgenannte Möglichkeit ist steuerungstechnisch aufwendiger, führt jedoch zu einem engeren Umfahren des Hindernisses durch den Arbeitskopf.

Die Geschwindigkeit der Schwenkbewegung der Taststange kann ermittelt werden, indem entweder der Schwenkwinkel pro Zeiteinheit um die aufrechte Achse ermittelt wird oder der Zeitabstand zwischen zwei verschiedenen Schwenkstellungen der ausgelösten Taststange und hieraus die Geschwindigkeit der Schwenkbewegung dazwischen ermittelt wird.

Eine Möglichkeit, um zu ermitteln, ob das Hindernis ein bis über die Taststange aufragender, und sich im Wesentlichen über die gesamte Länge der Taststange erstreckender Bewuchs ist, besteht darin, dass
- ermittelt wird, ob sich die Taststange in ihrem ausgelösten Zustand mindestens einmal, vorzugsweise mehrfach, entgegen ihrer Aktivierungs-Richtung wieder zurückbewegt in Fahrtrichtung,
- dies als Überfahren eines elastischen Hindernisses gewertet wird,
- bei mehrfacher Zurückbewegung als in Fahrtrichtung mehrfach vorhandenes elastisches Hindernis,
- insbesondere als Bewuchs, der bis auf die Höhe der Taststange aufragt.

### (Pfosten Freimähen mittels Zusatz-Mähwerk:)

Falls am äußeren Ende des, insbesondere innen laufenden, Mähkopfes ein Zusatz-Mähwerk zum Freimähen von Pfosten vorhanden ist, kann der Mähkopf, insbesondere wenn das Hindernis in der äußeren Hälfte auf die Taststange trifft, automatisch im Ganzen etwa in Querrichtung soweit nach innen verfahren werden statt verschwenkt zu werden, dass dieser innen laufende Mähkopf an dem Hindernis in Fahrtrichtung des Trägerfahrzeuges möglichst knapp vorbeifährt.

Der Bewuchs um das Hindernis herum wird dann auf dessen Innenseite durch das Zusatz-Mähwerk sehr eng freigemäht, indem das Hindernis das Zusatz-Mähwerk bei Vorwärtsfahrt entgegen seiner Vorspannung in Querrichtung nach innen drückt.

### (Kurvenfahrt:)

Wenn Hindernisse immer im gleichen Abstand zum Fahrbahn-Rand angeordnet sind und in kurzen, insbesondere regelmäßigen, Abständen vorhanden sind, insbesondere die Tragpfosten von Leitplanken, ist es ein Problem, dass bei Kurvenfahrt wegen des relativ weit vor dem Trägerfahrzeug laufenden inneren Arbeitskopfes die Hindernisse an gegenüber geradeaus weitergehender Fahrbahnkante abweichenden Querpositionen auftreffen.

Um dies zu vermeiden, kann automatisch ermittelt werden, ob der Auftreffpunkt auf der Taststange in Querrichtung von Hindernis zu Hindernis jeweils gleich bleibt oder in Querrichtung abwandert und in letzterem Fall - der eine Kurvenfahrt bedeutet - der Mähkopf mittels seines Auslegerarmes in Querrichtung so verstellt werden, dass die Querposition des Auftreffpunktes gleich bleibt, also wieder der gleiche Auftreffpunkt ist wie bei gerader Fahrbahnkante und gleich bleibenden Abstand der Hindernisse zur Fahrbahnkante.

### (Leitplanken-Auslauf in Boden:)

Ferner kann im Falle der Annäherung des Trägerfahrzeuges an ein im Boden versinkendes Leitplanken-Ende
- vom Bediener die automatische Nachführung des außen laufenden Arbeitskopfes vom innen laufenden Arbeitskopf deaktiviert werden,
- der innenlaufenden Arbeitsgruppe rechtzeitig vor der nach unten gerichteten Leitplanken-Ende in Querrichtung nach innen herausgefahren wird, insbesondere durch Verschwenken des Auslegerarmes um die Hochachse an seinem hinteren Ende, und hinter dem Ende der Leitplanke dieser Arbeitskopf wieder manuell in seine Ausgangsstellung gebracht werden,
- die automatische Nachführung des außen laufenden Arbeitskopfes vom innen laufenden Arbeitskopf wieder aktiviert werden.

### c) Ausführungsbeispiele

Ausführungsformen gemäß der Erfindung sind im Folgenden beispielhaft näher beschrieben. Es zeigen:
- **Figur 1a, b:**: ein Trägerfahrzeug mit zwei Ausleger-Mähgeräten in Frontansicht sowie in der Aufsicht von oben,
- **Figur 2a:**: den im Arbeitseinsatz innen fahrenden der beiden Mähköpfe in vergrößerter Einzeldarstellung in Frontansicht,
- **Figur 2b:**: ein Trägerfahrzeug mit nur dem im Arbeitseinsatz innen am Hindernis vorbeifahrenden Mähkopf in der Aufsicht,
- **Figur 3:**: den im Arbeitseinsatz außen fahrenden der beiden Mähköpfe in vergrößerter Einzeldarstellung in Frontansicht,
- **Figur 4a-c:**: die Nachführung des äußeren Mähkopfes bei Auslenkung des inneren Mähkopfes durch ein Hindernis,
- **Figur 5:**: die erfindungswesentlichen Parameter dargestellt an dem inneren Mähkopf in der Aufsicht,
- **Figur 6:**: zwei Mähköpfe im Flipper-Betrieb,
- **Figur 7:**: die Bewegung des inneren Mähkopfes bei einem Hindernis, wenn dieser über ein äußeres Zusatz-Mähwerk verfügt,
- **Figur 8:**: ein Trägerfahrzeug mit zwei Ausleger-Mähgeräten in der Aufsicht von oben bei Kurvenfahrt.

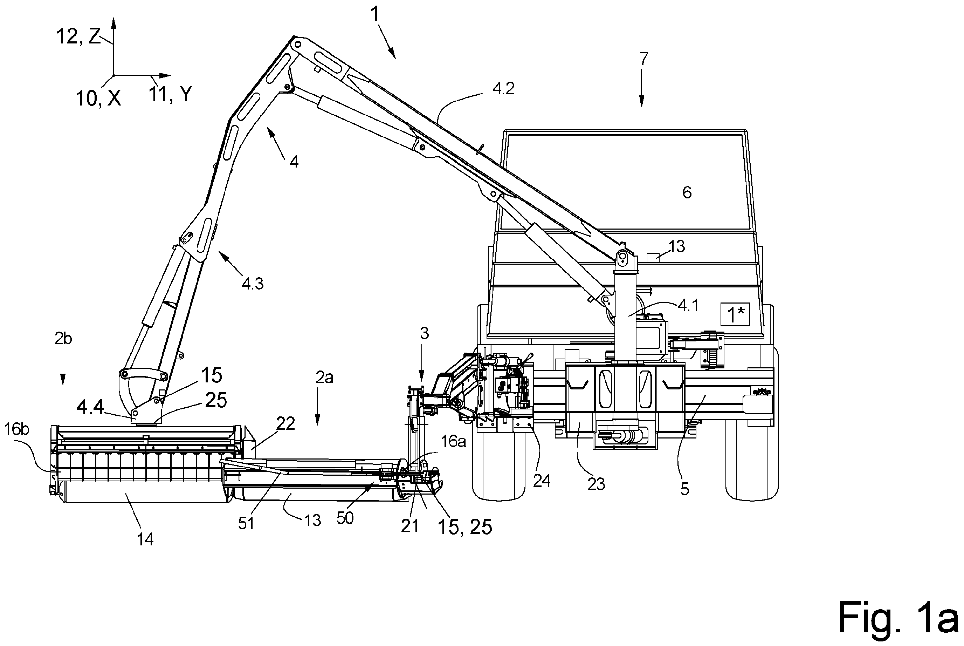

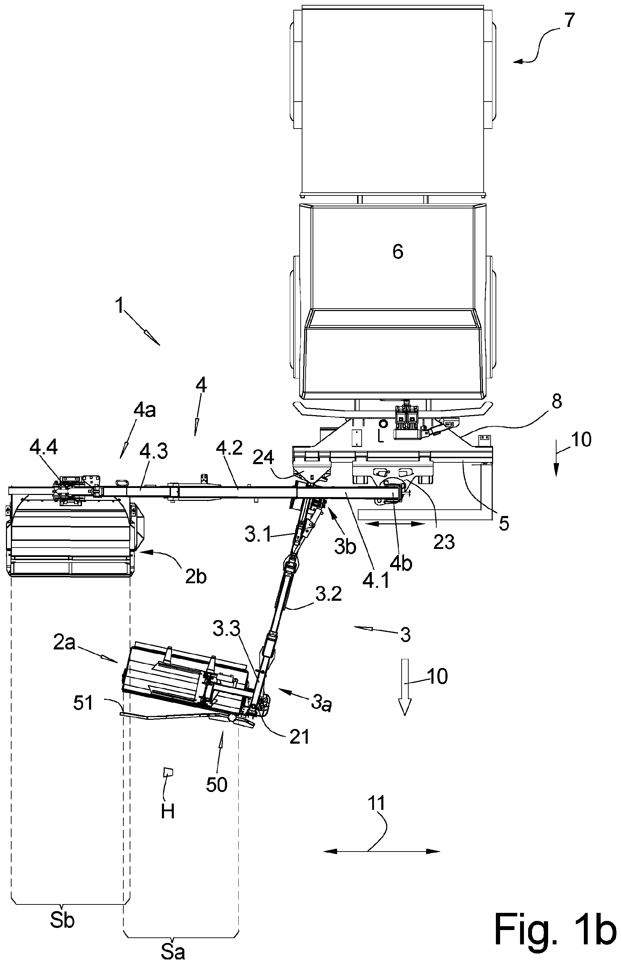

Die **Figuren 1a****, b** zeigen in Aufsicht und Frontansicht einen typischen Anwendungsfall eines selbstfahrenden Arbeitsfahrzeuges in Form eines Mähfahrzeuges im Arbeitseinsatz bestehend aus einem Trägerfahrzeug 7 mit zwei an je einem Auslegerarm 3, 4 an deren freien, vorderen Ende getragenen je einem Mähkopf 2a, b als Arbeitsköpfe:
Jeder Mähkopf 2a bzw. 2b ist von einem daran angeordneten Mähkopf-Motor 21, 22 angetrieben.

Beide Auslegerarme 3, 4 sind mit ihrem hinteren Ende 3b, 4b an einem an der Front des Trägerfahrzeuges 7 befestigten Vorbau 8 befestigt, indem der Vorbau 8 auf seiner Vorderseite eine Querversatzschiene 5 trägt, entlang welcher zwei Verschiebeschuhe 23, 24 unabhängig voneinander in Querrichtung 11 verschiebbar und während des Betriebes gesteuert verfahrbar sind. An jedem Verschiebeschuh 23, 24 ist jeweils einer der Auslegerarme 4, 3 befestigt.

Die Auslegerarme 3, 4 bestehen jeweils aus mehreren Armteilen:
Der Auslegerarm 4 besteht beispielsweise aus einem Armteil 4.1, welches vom Verschiebeschuh 23 etwa in Richtung der Vertikalen 12 nach oben aufragt und um eine Hochachse drehbar ist und von dessen freien Ende ein weiteres Armteil 4.2 abragt und um eine Querachse verschwenkbar ist und an diesem analog wiederum ein weiteres Armteil 4.3.

Die Winkelstellung der Armteile zueinander wird über dazwischen angeordnete Hydraulikzylinder gesteuert, wodurch der jeweilige Mähkopf 2a, b, der zusätzlich gelenkig um ein Z-Gelenk 25 am vorderen Ende des Auslegerarms 4 befestigt ist, in jede gewünschte Lage hinsichtlich der Fahrtrichtung 10 (X-Richtung), der horizontalen Querrichtung 11 (Y-Richtung) hierzu, sowie Drehlage um die Z-Achse 12, die Vertikale, eingestellt werden.

Durch ein in der Regel vorhandenes weiteres X-Gelenk 15 im Auslegerarm 3, 4 nahe dessen freien Endes ist jeder Mähkopf 2a, b zusätzlich schwenkbar um die Fahrtrichtung 10, die X-Achse, und kann damit um alle drei Raumrichtungen verschwenkt werden und in allen drei Raumrichtungen positioniert werden, soweit es die Abmessungen des Auslegerarmes 3, 4 zulassen.

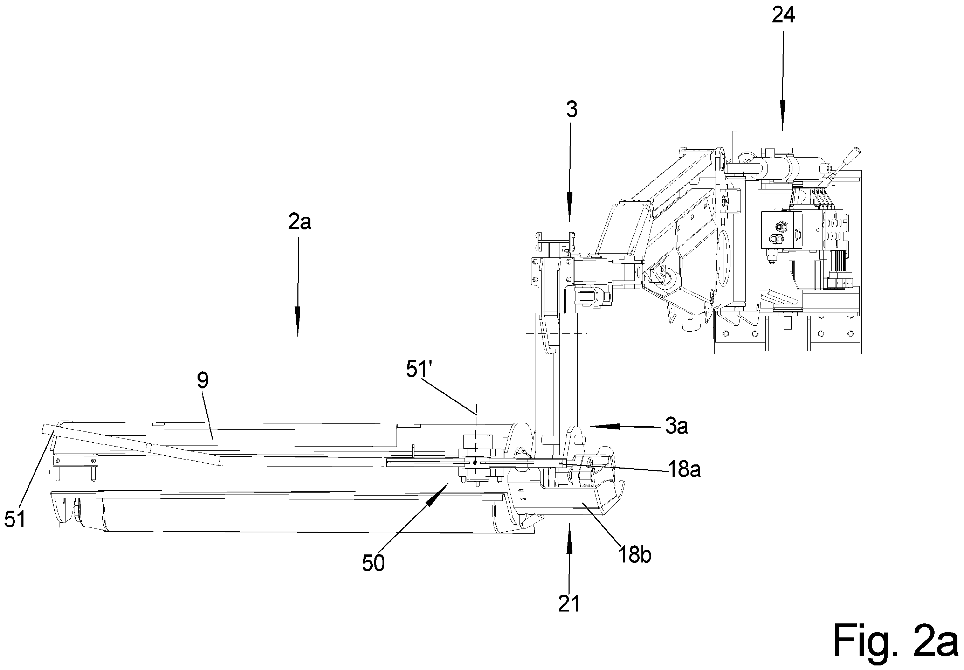

Wie am besten **Figur 2a** zeigt, werden von dem im Fahrerhaus 6 des Trägerfahrzeugs 7 sitzenden Bediener die Mähköpfe 2a, b so gesteuert, dass der innere Mähkopf 2a einen Randstreifenbereich unmittelbar neben dem Trägerfahrzeug 7 mäht und in Fahrtrichtung 10 vor dem Vorbau 8 des Trägerfahrzeuges 7 positioniert ist, während der äußere Mähkopf 2b den daran seitlich anschließenden, weiter außen bezüglich des Trägerfahrzeuges 7 liegenden, Randbereich mäht und in Fahrtrichtung 10 hinter dem ersten Mähkopf 2a, und meist immer noch in Fahrtrichtung 10 vor dem Trägerfahrzeug 7, positioniert ist.

Durch diese Aufteilung können auch Hindernisse H, die im Bereich zwischen den leicht überlappenden Mäh-Spuren Sa, Sb, der beiden Mähköpfe 2a, b liegen, wie etwa Straßenleitpfosten oder Verkehrsschilder, beidseitig ummäht werden.

Zu diesem Zweck ist an der Vorderkante des vorderen Mähkopfes 2a meist eine Taststange 51 vorhanden, die beim Anschlagen an ein solches Hindernis H an den Mähkopf 2a heran geschwenkt wird und dadurch ein Einklappen dieses Mähkopfes 2a um das auf der fahrzeugseitigen Stirnseite dieses Mähkopfes 2a angeordnete Z-Gelenk 25 bezüglich des ihn tragenden Auslegerarmes 3 bewirkt.

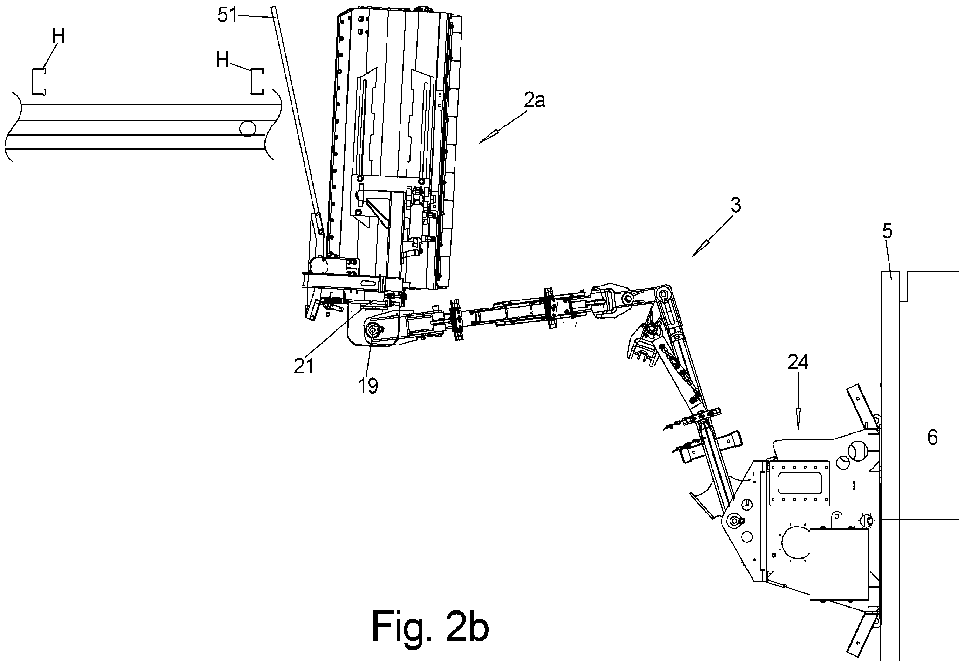

In den **Figuren 2a****, b** ist ferner im Fahrerhaus 6 im Sichtbereich des Bedieners ein Anzeigeelement 13 dargestellt, auf dem die von dem Sensor gemessenen Belastungen auf die Taststange 51 und die daraus von der Steuerung 1* gezogenen Rückschlüsse ausgegeben werden können.

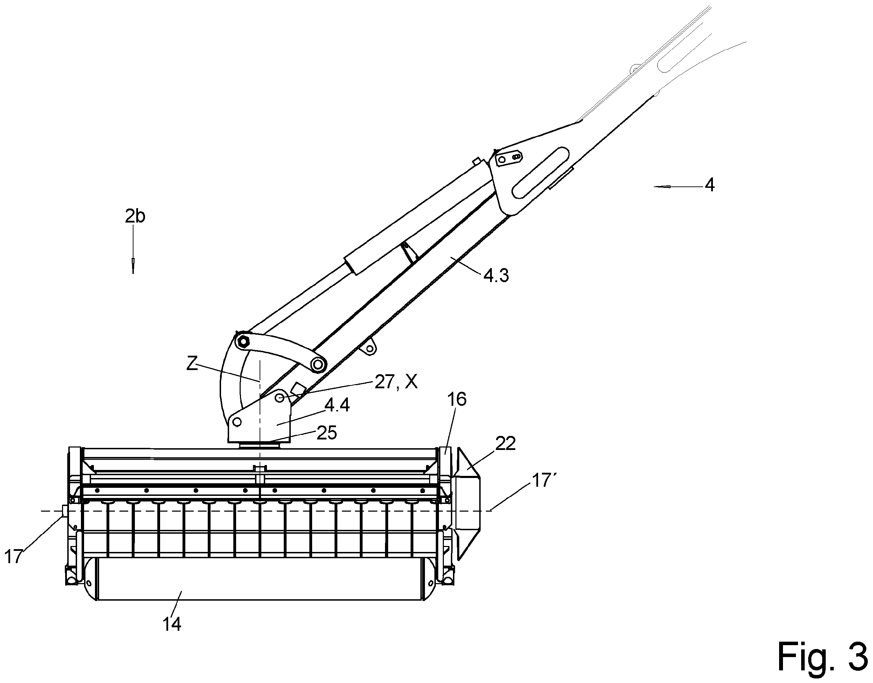

Die **Figur 3** zeigt den weiter außen arbeitenden Mähkopf 2b in vergrößerter Einzeldarstellung einschließlich des Z-Gelenkes 25, wobei die hierfür notwendigen Stellelemente nicht dargestellt sind:
Dieser Mähkopf 2b weist ein Gehäuse 16 auf, welches in der Quermitte über dieses Z-Gelenk 25 um die Z-Achse, die meist eine Hochachse ist, schwenkbar am freien Ende des Auslegerarmes 4 befestigt ist.

Im Inneren des nach unten offenen Gehäuses 16 ist eine Messerwelle 17 mit jedem ihrer beiden Enden um eine Messerwellen-Achse 17' in einem Stirnflansch des Gehäuses 16 gelagert.

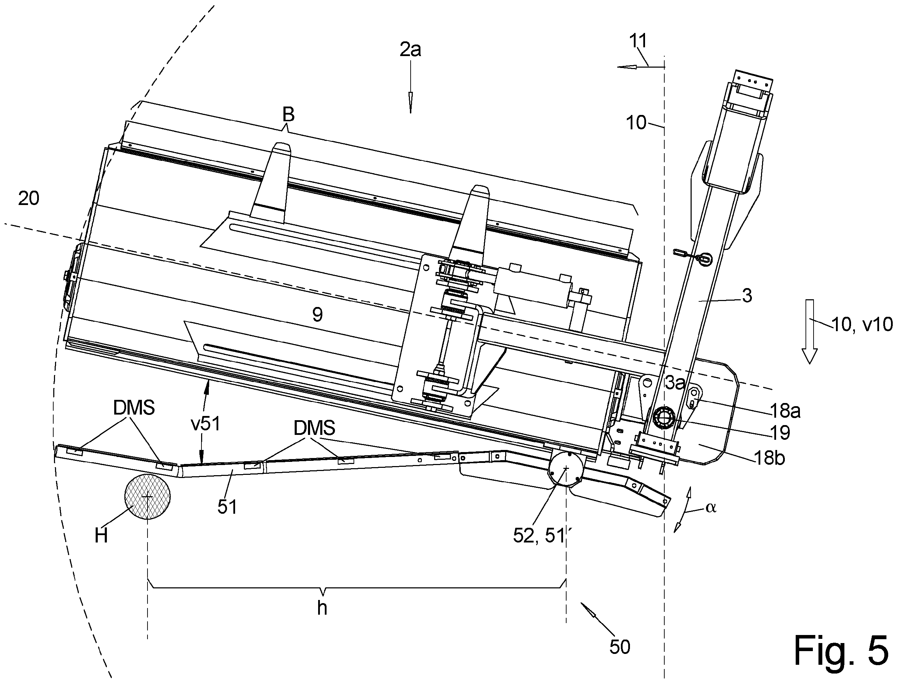

**Figur 5** zeigt in einer vergrößerten Darstellung des Mähkopfes 2a die Hindernis-Einheit 50 mit seinen Details:
Die Taststange verläuft in der Aufsicht betrachtet vor der Front des Gehäuses 9 des Mähkopfes 2a und ist demgegenüber verschwenkbar um eine aufrechte Schwenkachse 51', die sich etwa am inneren, also der Basis des Auslegerarmes und damit dem Träger-Fahrzeug zugewandten Seite der Breite des Arbeitsbereiches des Mähkopfes 2a befindet. Im Arbeitseinsatz, wenn kein Hindernis H vorhanden ist, steht der Mähkopf 2a vorzugsweise mit seiner Haupterstreckungsrichtung 20 nicht exakt lotrecht zur Fahrtrichtung 10, also in Querrichtung 11, sondern mit seinem äußeren freien Ende demgegenüber leicht nacheilend um etwa 10°.

In dieser Ausgangsstellung wird der Mähkopf 2a gehalten, indem er mit seinem Hauptteil um die aufrechte Achse 19 herum nach vorne, also bei Straßen mit Rechtsverkehr entgegen dem Uhrzeigersinn, gegen einen Anschlag am Arm-Ende 18a des Auslegerarmes 3 gedrückt wird.

Die Taststange 51 verläuft vorzugsweise nicht gerade und parallel zur Front des Gehäuses 9 des Mähkopfes 2a, sondern ist leicht S-förmig geschwungen wobei an der Schwenkachse 51 ` die Taststange 51 den geringsten Abstand zur Vorderkante des Gehäuses aufweist und die Taststange 51 am radial äußeren, freien Ende den größten Abstand hat.

Dadurch wird ein Schwenkweg von ca. 20° - 25° sichergestellt, bevor die Taststange mittels eines Hindernisses die Front des Gehäuses 9 des Mähkopfes 2a erreicht bzw. kurz vorher gestoppt wird durch einen Anschlag für eine nur begrenzte Beweglichkeit um die aufrechte Achse 51'.

In diesem Fall ist mit der aufrechten Schwenkachse 51' ein Drehwinkel-Sensor 52 gekoppelt, der die Drehbewegung, also Schwenk-Bewegung, der Taststange 51 um die Schwenkachse 51 detektiert, vorzugsweise ständig detektiert, und an die Steuerung des Ausleger-Arbeitsgerätes meldet.

Der in Querrichtung 11 gemessene Abstand zwischen dem Kontaktpunkt, mit dem ein Hindernis H die Taststange 51 kontaktiert, und der aufrechten Schwenkachse 51' korreliert mit dem Schwenkwinkel α bei Auslenkung der Taststange 51 dahingehend, dass die Änderung der Winkelstellung umso schneller stattfindet, je geringer der radiale Abstand h des Hindernisses ist, natürlich bei gleichbleibender Fahrgeschwindigkeit v10.

Ferner zeigt **Figur 5****,** dass von der Schwenkachse 51' aus bis zum freien Ende der Taststange 51 hin in Abständen Dehnungsstreifen (DMS) angeordnet sind, die die Biegebelastung der Taststange 51 um die aufrechte Achse 51' messen.

Damit kann auf das Vorliegen eines singulären oder eines flächigen Hindernisses H geschlossen werden, und bei ausreichender Erstreckung in Querrichtung 11 in etwa die Breite des Hindernisses H und insbesondere das radial innere Ende als auch das äußere Ende des Hindernisses relativ zur Schwenkachse 51' bestimmt werden.

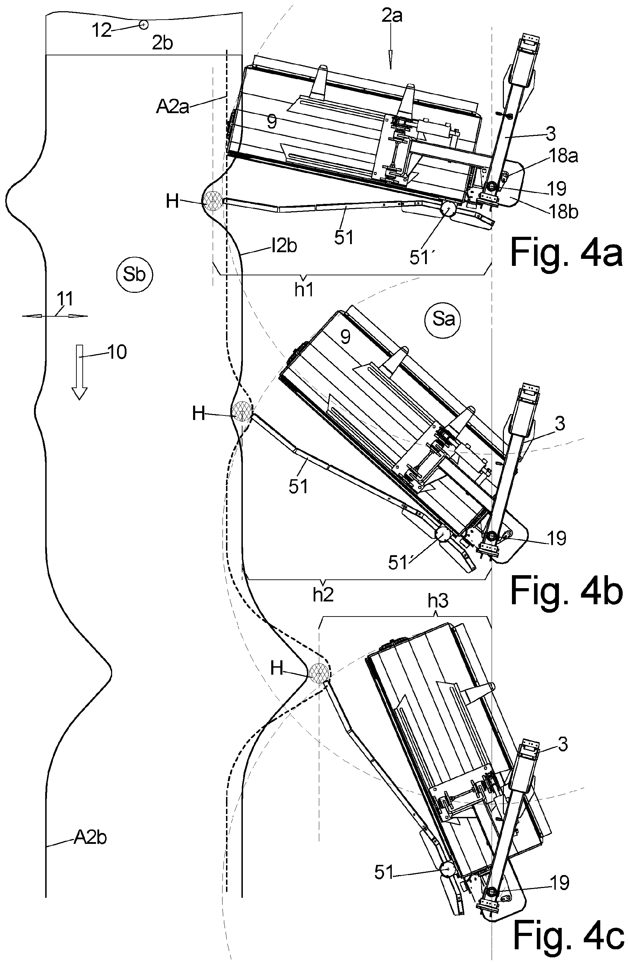

Die **Figuren 4a, b, c** zeigen am Beispiel von singulären, von der Schwenkachse 51' des in Fahrtrichtung 10 bewegten Gehäuses 9 in Querrichtung 11 jedoch unterschiedlich weit entfernten Hindernissen H die mit dieser Ausstattung erzielbaren Bewegungen des mit der Taststange 51 ausgestatteten, innen laufenden Mähkopfes 2a sowie des weiter außen laufenden Mähkopfes 2b.

**Figur 4a** zeigt am Beispiel eines Hindernisses H, an dem mit nur minimaler Auslenkung des Mähkopfes 2a auf der Innenseite vorbei gemäht werden kann, dass - vor dem Hindernis H, also im regulären Mähbetrieb - die Mähspuren Sa, Sb der beiden im Einsatz befindlichen Mähköpfe 2a, b aufgrund entsprechender Steuerung einander überlappen, also die Außenkante A2a des innen laufenden Mähkopfes 2a in Querrichtung 11 etwas weiter außen liegt als die Innenkante I2b des außen laufenden Mähkopfes 2b.

Aus **Figur 4a** wird klar, dass für das Passieren des Hindernisses H auf der Innenseite der innere Mähkopf 2a so gut wie nicht um seine aufrechte Schwenkachse 19 verschwenkt werden muss, da der radiale Abstand h1 des Hindernisses H von der Schwenkachse 51' etwa der Länge der Taststange 51 von dieser Schwenkachse 51' aus entspricht.

Allerdings muss hierfür die Innenkante I2b des äußeren Mähkopfes 2b außen um das Hindernis H herumgeführt werden, um eine Kollision mit dem Hindernis H zu vermeiden, egal ob dies durch Querverlagerung dieses äußeren Mähkopfes 2b in Querrichtung 11 nach außen oder durch Schrägstellung dieses Mähkopfes um eine aufrechte Achse, nämlich seine Z-Achse 12, geschieht.

In **Figur 4b** ist das Hindernis H in Querrichtung 11 etwas näher am Auslegerarm 3 und der aufrechten Achse 19 positioniert, um die der innen laufende Mähkopf 2a verschwenkt werden kann, nämlich im radialen Abstand h2 zur Schwenkachse 51', sodass die Taststange 51 vollständig bis zu ihrer Maximalstellung ausgelenkt wird und der Mähkopf 2a im Uhrzeigersinn um die aufrechte Achse 19 gegenüber dem Auslegerarm 3 verschwenkt wird, wobei allerdings ersichtlich ist, dass die Außenkante A2a seiner Mähspur Sa erst kurz vor dem Hindernis H in Querrichtung 11 nach innen wandert und die Auslenkung aus der normalen Richtung der Außenkante A2a auch in Längsrichtung 10 nur kurz ist.

Die Innenkante I2b des äußeren Mähkopfes 2b muss in diesem Fall nur noch sehr wenig in Querrichtung 11 nach außen um das Hindernis H herum verfahren werden und auch in Fahrtrichtung 10 über eine damit nur sehr kurze Strecke.

Anders dagegen bei **Figur 4c****,** bei dem das Hindernis H noch näher in Querrichtung 11 an der Linie, die die aufrechte Schwenkachse 19 des Mähkopfes 2a fährt, positioniert ist, und zwar im Abstand h3 zur Schwenkachse 51':
Der innere Mähkopf 2a wird analog sehr eng auf der Innenseite um das Hindernis H herumgeführt, wobei aufgrund der Bekanntheit der Querposition des Hindernisses H und auch seiner Position in Fahrtrichtung 10 die Auslenkung der Au-ßenkante A2a nur über eine kurze Strecke in Längsrichtung 10 notwendig ist.

Die Innenkante I2b des äußeren Mähkopfes 2b wird dagegen nun in Querrichtung nach innen verlagert um auf der Außenseite des Hindernisses H keine große ungemähte Fläche als Mähschatten MS zurück zu lassen.

Natürlich bewirkt dies auch in der Außenkante A2b der Mähspur Sb des äußeren Mähkopfes 2b eine Abweichung von der Geraden in Längsrichtung 10, jedoch wird dies als das kleinere Übel gesehen, da diese Außenkante A2b weiter vom Fahrbahnrand entfernt ist und die Sichtbarkeit des Hindernisses H, beispielsweise eines Verkehrsschildes oder eines Straßen-Leitpfostens, nicht behindert.

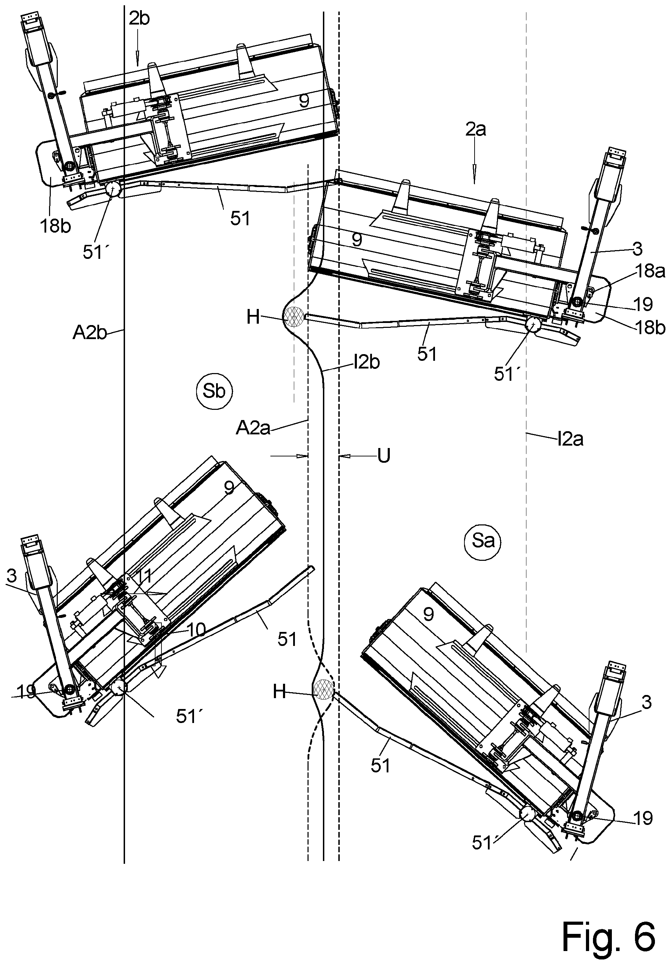

**Figur 6** zeigt, wie beim Mähen mit einem Tandem-Mäher der verbleibende Mähschatten MS am Hindernis H reduziert werden kann:
Wenn dabei an jedem der beiden Auslegerarme 3, 4 ein Mähkopf 2a, b mit einer Taststange 51 an seiner Front befestigt ist, und zwar so, dass die beiden Mähköpfe 2a, b mit ihrem freien, also von der Befestigung am Auslegerarm 3, 4 abgewandten, Ende den überlappenden Bereich Ü der beiden Mähspuren Sa, Sb mähen, kann bei Bedarf jeder der beiden Mähköpfe 2a, b um seine aufrechte Achse 19 herum ausgelenkt werden, - wie die Schwenkarme bei einem Flipper-Automaten - wenn ein Hindernis H auf seiner Mähspuren Sa, Sb auftaucht und die Taststange 51 betätigt, was deshalb als "Flipperbetrieb" bezeichnet wird.

Wie an dem in **Figur 6** oberen Hindernis erkennbar, kann das Hindernis H in Querrichtung 11 so liegen, dass der eine Mähkopf 2a gerade noch daran vorbeigefahren werden kann ohne zu verschwenken, der andere Mähkopf 2b dagegen verschwenkt werden muss.

Dann verbleibt vor und hinter dem Hindernis H ein jeweils etwa dreieckiger Mähschatten MS ungemäht.

Eine Verbesserung wird vor allem dann erzielt, wenn sich das Hindernis H im Überlappungsbereich Ü befindet - wie am unteren Hindernis H dargestellt - also für das Umfahren beide Mähköpfe 2a, b verschwenkt werden müssen.

Wie ersichtlich verbleibt dann ebenfalls vor und nach dem Hindernis H jeweils ein dreieckiger Mähschatten MS, der jedoch jeweils kleiner ist als am darüber dargestellten oberen Hindernis H.

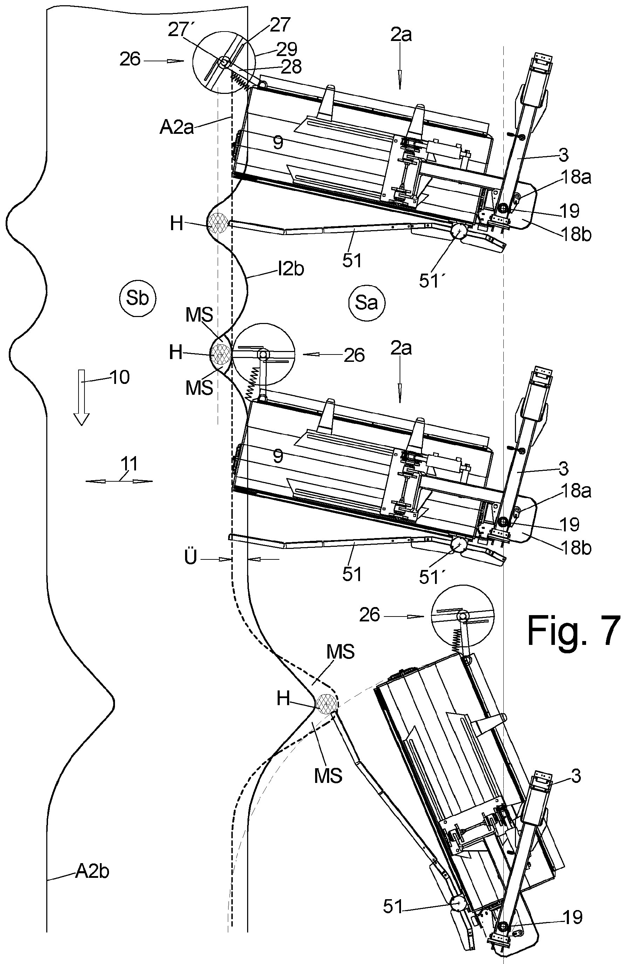

**Figur 7** zeigt, wie der Mähschatten noch weiter reduziert werden kann:
Dies ist möglich, indem der Mähkopf - hier 2a - an seinem vom Befestigungsende gegenüber dem jeweiligen Tragarm - hier dem Tragarm 3 - abgewandten Ende ein Zusatz-Mähwerk 26 befestigt ist, dessen Mäh-Bereich in Querrichtung 11 über den des ihn tragenden Mähkopfes 2a hinausreicht, und welches somit um ein Hindernis H herummähen kann, welches sich knapp außerhalb der Mähspur - hier Sa - des ihn tragenden Mähkopfes 2a befindet.

Zu diesem Zweck ist das Zusatz-Mähwerk 26 am hinteren, äußeren Ende des Gehäuses 9 dieses Mähkopfes 2a so befestigt, dass es in die am weitesten vorstehende Stellung vorgespannt ist und durch ein herandrückendes Hindernis H nach hinten weggedrückt wird und dadurch im Kontakt mit dem Mähkopf-seitigen Umfang des Hindernisses H eng um dieses herummäht.

Im vorliegenden Fall ist dies dadurch realisiert, dass das Zusatz-Mähwerk 26 am freien Ende eines Schwingenarmes 28 befestigt ist, welcher im Bereich des hinteren äußeren Ecks auf der vom Tragarm 3 abgewandten Seite des Gehäuses 9 befestigt ist, im Wesentlichen in Querrichtung 11 vorsteht und von einer z.B. Feder vorgespannt wird gegen einen Anschlag, der ein weiteres nach vorne schwenken begrenzt.

Das Zusatz-Mähwerk 26 besteht in diesem Fall aus einem um eine aufrechte Achse 27' rotierenden Messer 27, wobei sich in der Aufsicht betrachtet auf oder knapp außerhalb von dessen Flugkreis ein Schutzring 29 befindet, um ein Anschlagen des Messers 27 an einem Hindernis H zu vermeiden.

Dabei liegt im nicht ausgelenkten Ausgangszustand die aufrechte Achse 27' nicht oder nur so wenig außerhalb der äußersten Gehäusekante, dass sich dazwischen ein Hindernis H nicht verklemmen kann.

Aufgrund der Tatsache, dass der Krümmungsradius des Schutzringes 29 sehr viel geringer ist als der Radius, den die Außenkante des Gehäuses 9 beim Schwenken um seine aufrechte Achse 19 beschreibt, ist der Mähschatten MS, den ein solches Zusatz-Mähwerk 28 nach dem Ummähen eines Hindernisses H zurücklässt gemäß der mittleren Position der **Figur 7** deutlich kleiner als der Mähschatten MS, der beim Ummähen des Hindernisses H durch Verschwenken des Mähkopfes 2a verbleibt.

Damit der Mähkopf 2a knapp am Hindernis H vorbeigeführt werden kann, wird der Mähkopf 2a nicht um seine aufrechte Achse 19 verschwenkt, sondern der gesamte Mähkopf 2a ohne Verschwenken in Querrichtung 11 mittels verlagert des vorderen Endes des ihn tragenden Auslegerarmes 3.

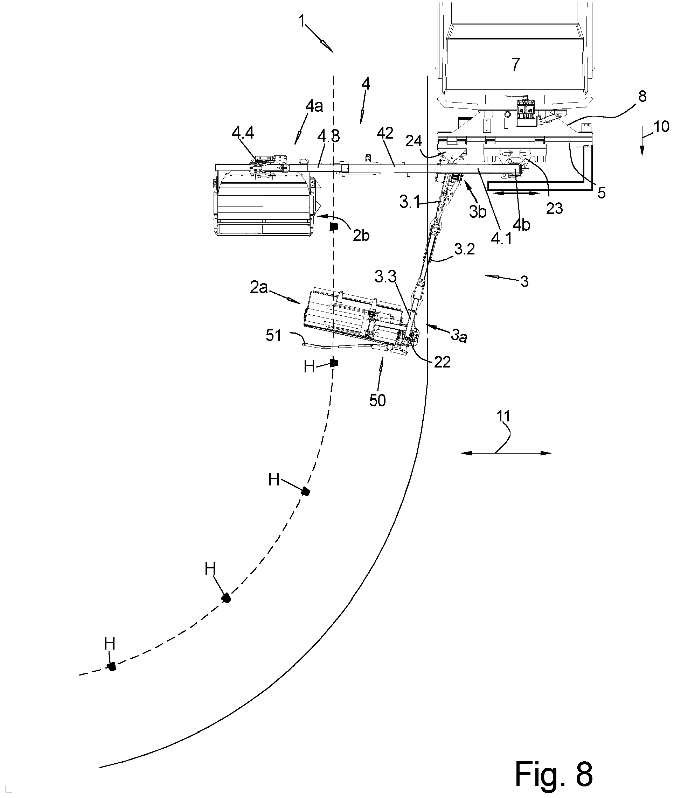

**Figur 8** zeigt die Problematik bei einer Kurvenfahrt des Trägerfahrzeuges 7, wenn die Mähkopf 2a, zu der sich regelmäßig wiederkehrende Hindernisse H wie etwa die Tragpfosten von Leitplanken-Anlagen, die sich in einem immer gleichbleibenden Abstand zur Fahrbahnkante befinden, auftreffen.

Da sich gerade der innen laufende Mähkopf 2a etwa 2 bis 3 m vor der Front des Trägerfahrzeuges 7 befindet, fährt vor dem Beginn einer Kurve das Trägerfahrzeug noch entlang der geraden Fahrbahnkante, während am Mähkopf 2a bereits Hindernisse H auftreffen, die sich schon im Bereich der Kurve der Fahrbahnkante befinden.

Deshalb wird zu Beginn der Kurve und/oder während der gesamten Kurvenfahrt - wie in **Figur 8** bei Rechtsverkehr und einer Rechtskurve dargestellt - der Auftreffpunkt des Hindernisses H auf der Taststange 51 gegenüber einem geraden Straßenabschnitt nach außen wandern und somit der Mähkopf 2a nicht mehr sehr weit über die Hindernisse H nach außen vorstehen.

Da immer gleiche Arbeitsverhältnisse angestrebt werden, will man dies vermeiden, wozu von der Steuerung automatisch detektiert wird, ob sich bei regelmäßig auftauchenden Hindernissen - bei denen man einen immer gleichen Abstand zur Fahrbahnkante unterstellt - der Auftreffpunkt der Hindernisse H auf der Taststange 51 in Querrichtung 11 verschiebt.

Falls ja, wird dies durch Verschwenken des den Mähkopf 2a tragenden Auslegerarmes 3 um seine aufrechte Achse gegenüber dem Trägerfahrzeug 7, also am Verschiebeschuh 24, ausgeglichen, und am Ende der Kurve beim Übergang in einen geraden Straßenabschnitt analog umgekehrt vorgegangen.

### BEZUGSZEICHENLISTE

- 1: Ausleger-Arbeitsgerät
- 1*: Steuerung
- 2, 2a, b: Arbeitskopf, Mähkopf
- 3, 4: Auslegerarm
- 3a: vorderes Ende
- 3b: hinteres Ende
- 3.1/.2/.3: Armteil
- 4a: vorderes Ende
- 4b: hinteres Ende
- 4.1/.2/.3/.4: Armteil
- 5: Querversatzschiene
- 6: Fahrerkabine
- 7: Trägerfahrzeug
- 8: Vorbau
- 9: Gehäuse
- 10: Fahrtrichtung, X-Richtung
- 11: Querrichtung zur Fahrtrichtung, Y-Richtung
- 12: Vertikale, Z-Richtung
- 13: Tastwalze
- 14: Tastwalze
- 15: X-Gelenk
- 16: Gehäuse
- 17: Messerwelle
- 17': Messerwellen-Achse
- 18a: Armende
- 18b: Kopfende
- 19: aufrechte Schwenkachse
- 19 20: Haupt-Erstreckungsrichtung von 2a
- 21: Mähkopf-Motor
- 22: Mähkopf-Motor
- 23: Verschiebeschuh
- 24: Verschiebeschuh
- 25: Z-Gelenk
- 26: Zusatz-Mähwerk
- 27: Messer
- 28: Schwingenarm
- 29: Schutzring

- 50: Hindernis-Einheit
- 51: Taststange
- 51': Schwenkachse
- 52: Schwenk-Sensor

- B: Arbeitsbreite
- DMS: Dehnmessstreifen
- h, h1, h2: radialer Abstand
- MS: Mähschatten
- Sa, Sb: Mäh-Spur
- Ü: Überlappungsbereich
- v10: Geschwindigkeit Arbeitskopf in 10
- v51: Drehgeschwindigkeit um 51'

## Patentansprüche

1. **Ausleger-Arbeitsgerät** (1) zum Befestigen an einem in Fahrtrichtung (10), insbesondere auf einer Fahrbahn, fahrbaren Trägerfahrzeug (7), mit
- wenigstens einem, insbesondere mehrteiligen, Auslegerarm (3), dessen hinteres Ende (3b) an einem Trägerfahrzeug (7) befestigt werden kann,
- einem Armende (18a) am vorderen Ende (3a, 4a) des Auslegerarmes (3, 4),
- einem Arbeitskopf (2), welcher mit seinem dem Armende (18a) zugewandten Kopfende (18b) am Armende (18a) schwenkbar befestigt ist und sich in der Aufsicht betrachtet im normalen Betrieb mit seiner größten Erstreckung (20) etwa in Querrichtung (11) zur Fahrtrichtung (10) erstreckt,
- einer Hindernis-Einheit (50) am vorderen Ende des Arbeitskopfes (2) zum Detektieren eines sich bei Vorwärtsfahrt des Trägerfahrzeuges (7) von vorne nähernden Hindernisses (H),
- einer Steuerung (1*) zum Steuern zumindest aller beweglichen Teile des Ausleger-Arbeitsgerätes (1),
**dadurch gekennzeichnet, dass**
- die Hindernis-Einheit (50) so ausgebildet ist, dass sie in der Lage ist, die Position des Hindernisses (H) in Erstreckungsrichtung (20) relativ zum Arbeitskopf (2) zu ermitteln,
- insbesondere zu ermitteln, ob es sich dabei um ein starres Hindernis (H) handelt,
- die Steuerung (1*) so ausgebildet ist, dass sie in der Lage ist, für das nahe Herumführen des Arbeitskopfes (2) auf der dem Trägerfahrzeug (7) zugewandten Innenseite des Hindernisses (H) die ermittelte Querposition des Hindernisses (H) als auch die Vorwärts-Geschwindigkeit (v10) des Arbeitskopfes (2) zu berücksichtigen.

2. Ausleger-Arbeitsgerät nach Anspruch 1,
**dadurch gekennzeichnet, dass**
die Hindernis-Einheit (50)
- entweder eine kontaktierend arbeitende Hindernis-Einheit (50) ist
- oder eine berührungslos arbeitende, insbesondere optische, Hindernis-Einheit (50) ist.

3. Ausleger-Arbeitsgerät nach einem der vorhergehenden Ansprüche,
**dadurch gekennzeichnet, dass**
die Hindernis-Einheit (50)
- eine Taststange (51) umfasst, die in der Aufsicht betrachtet quer zur Fahrtrichtung (10) verlaufend vor dem Gehäuse (16) der Arbeitseinheit des Arbeitskopfes (2) schwenkbar um eine aufrechte Schwenkachse (51') am Arbeitskopf (2) befestigt ist und
- einen Schwenk-Sensor (52) umfasst, der in der Lage ist, die Schwenkstellung der Taststange (51) wenigstens in zwei verschiedenen Schwenkstellungen zu ermitteln.

4. Ausleger-Arbeitsgerät nach einem der vorhergehenden Ansprüche,
**dadurch gekennzeichnet, dass**
der Schwenk-Sensor (52)
- entweder wenigstens eine abseits der Schwenkachse (51') angeordneter Tast-Einheit (52) ist, die bei Auslenkung der Taststange (51) eingedrückt wird und in der Lage ist, mindestens zwei unterschiedliche Schwenkstellungen der Taststange (51) zu detektieren,
- oder ein Drehwinkel-Sensor (52) ist, der insbesondere an oder in der Schwenkachse (51') angeordnet ist und vorzugsweise in der Lage ist, den Schwenkwinkel der Taststange (51) kontinuierlich zu messen.

5. Ausleger-Arbeitsgerät nach einem der vorhergehenden Ansprüche,
**dadurch gekennzeichnet, dass**
ein Kanten-Sensor (30) vorhanden ist, der in der Lage ist, insbesondere berührungslos, die Kante der Fahrbahn oder eine Markierung entlang der Fahrbahn oder ein anderes, den Verlauf der Kante der Fahrbahn repräsentierendes, optisches Merkmal abzutasten und der mit der Steuerung (1*) datentechnisch verbunden ist.

6. Ausleger-Arbeitsgerät nach einem der vorhergehenden Ansprüche,
**dadurch gekennzeichnet, dass**
- die Schwenkachse (51') außerhalb der Arbeitsbreite (B) des Arbeitskopfes (2) angeordnet ist,
- vorzugsweise zur Innenseite, also zum Trägerfahrzeug (7) hin, außerhalb der Arbeitsbreite (B).
(Bewuchs:)

7. Ausleger-Arbeitsgerät nach einem der vorhergehenden Ansprüche,
**dadurch gekennzeichnet, dass**
- die Steuerung (1*) so ausgebildet ist, dass sie in der Lage ist, aus den von der Hindernis-Einheit (50) erhaltenen Daten zu ermitteln, ob
- es sich um ein starres, nicht elastisches oder
- ein in Fahrtrichtung (10) nachgiebiges, elastisches Hindernis (H) handelt,
insbesondere
- die Steuerung (1*) so ausgebildet ist, dass sie in der Lage ist, aus den von der Hindernis-Einheit (50) erhaltenen Daten zu ermitteln, ob das elastische Hindernis (H) ein über die Breite des Arbeitskopfes (2) vielfach vorhandenes, verteiltes Hindernis (H) ist.
(Tandem-Mäher:)

8. Ausleger-Arbeitsgerät nach einem der vorhergehenden Ansprüche, mit
- wenigstens einem zweiten, insbesondere mehrteiligen, Auslegerarm (4), dessen hinteres Ende (4b) an dem Trägerfahrzeug (7) befestigt werden kann,
- einem Armende (18a) als vorderes Ende (4a) des Auslegerarmes (4),
- einem zweiten Arbeitskopf (2b), welcher mit seinem dem Armende (18a) zugewandten Kopfende (18b) am Armende (18a) schwenkbar befestigt ist und sich in der Aufsicht betrachtet im normalen Betrieb mit seiner größten Erstreckung (20) in Querrichtung (11) zur Fahrtrichtung (10) erstreckt,
- wobei im Arbeitsbetrieb der zweite Arbeitskopf (2b) in Querrichtung (11) versetzt außerhalb der Arbeitsbreite (B) des ersten Arbeitskopfes (2a) arbeiten kann,
**dadurch gekennzeichnet, dass**
- die Steuerung (1 *) so ausgebildet ist, dass sie in der Lage ist, für das Steuern des zweiten Arbeitskopfes (2b) und eines gegebenenfalls weiteren Arbeitskopfes, insbesondere hinsichtlich dessen Querposition im Arbeitsbetrieb, die ermittelte Querposition des Hindernisses (H) zu berücksichtigen und
- insbesondere den zweiten Arbeitskopf (2b) nahe an der Außenseite des Hindernisses (H) vorbei zu steuern,
insbesondere
- die Steuerung (1*) so ausgebildet ist, dass manuell die automatische Nachführung des außen laufenden Arbeitskopfes (2b) gegenüber dem innen laufenden Arbeitskopf (2a) abgeschaltet werden kann und während dieser abgeschalteten Zeit der außen laufende Arbeitskopf (2b) samt seines Auslegerarmes (4) seine Position zum Trägerfahrzeug (7) beibehält.
(Flipper:)

9. Ausleger-Arbeitsgerät nach einem der vorhergehenden Ansprüche, **dadurch gekennzeichnet, dass**
- an beiden Auslegerarmen (3, 4) jeweils ein mit einer Hindernis-Einheit (50), insbesondere einer mit einem Schwenk-Sensor (52) gekoppelten Taststange (51), ausgestatteter Arbeitskopf (2a, b) befestigt ist,
- wobei die beiden Arbeitsköpfe (2a, b) insbesondere im Wesentlichen identisch ausgebildet sind,
- wobei der außen laufende Arbeitsköpf (2b) mit seinem äußeren Ende und der innen laufende Arbeitskopf mit (2a) seinem inneren Ende an ihrem jeweiligen Auslegerarm (3,4) gehalten sind.
(Zusatz-Mähwerk:)

10. Ausleger-Arbeitsgerät nach einem der vorhergehenden Ansprüche, **dadurch gekennzeichnet, dass**
- am im Arbeitseinsatz äußeren, also in der Regel rechten, Ende des Gehäuses (9) des Arbeitskopfes (2a) ein Zusatz-Mähwerk (26) mit mindestens einem um eine aufrechte Achse (27') rotierenden Messer (27) vorhanden ist, welches außerhalb der Arbeitsbreite der horizontal liegenden Messerwelle (17) dieses Arbeitskopfes (2a) angeordnet ist und nach hinten und innen verlagert werden kann,
- insbesondere am freien Ende einer um eine aufrechte Achse schwenkbaren und mittels Federkraft in Fahrtrichtung (10) vorgespannten, am Gehäuse (9) befestigten, Schwingenarmes (28).
(Ermittlung Querposition zum Trägerfahrzeug:)

11. Ausleger-Arbeitsgerät nach einem der vorhergehenden Ansprüche, **dadurch gekennzeichnet, dass**
- die Hindernis-Einheit (50) so ausgebildet ist, dass sie in der Lage ist, die Position des Hindernisses (H) in Querrichtung (11) relativ zum hinteren Ende (3b) des Ausleger-Armes (3) oder eines Trägerfahrzeuges (7) zu ermitteln,
- insbesondere indem zumindest in den Schwenk-Gelenken des Auslegerarmes (3 bzw. 4) mit einer aufrechten Schwenkachse, insbesondere in allen Schwenk-Gelenken zwischen den einzelnen Armteilen sowie zwischen Auslegerarm (3, 4) und Trägerfahrzeug (7) und zwischen Auslegerarm (3, 4) und dem daran gehaltenen Arbeitskopf (2), Sensoren vorhanden sind, die die Schwenkstellung dieses Gelenkes detektieren und an die Steuerung (1*) melden.

12. **Selbstfahrende Arbeitsmaschine** mit
- einem Trägerfahrzeug (7),
- wenigstens einem Ausleger-Arbeitsgerät (1) nach einem der vorhergehenden Ansprüche, umfassend je
- einen, insbesondere mehrteiligen, Auslegerarm (3, 4) mit Stellelementen zum Verstellen der Armteile (3.1, 3.2, 3.3 bzw., 4.1, 4.2, 4.3, 4.4) relativ zueinander,
- einen am freien, vorderen (3a, 4a) Ende des Auslegerarmes (3, 4) gelenkig befestigten und mittels Stellelementen verstellbaren Arbeitskopfes (2a, 2b), der im Arbeitseinsatz in Kontakt mit der Umgebung seitlich neben dem Trägerfahrzeug (7) gerät,
- einer Hindernis-Einheit (50) am vorderen Ende des Arbeitskopfes (2a) zum Detektieren eines sich von vorne nähernden Hindernisses (H),
- einer Steuerung (1*) zum Ansteuern zumindest der Stellelemente,
**dadurch gekennzeichnet, dass**
- die Hindernis-Einheit (50) angeordnet und/oder ausgebildet ist gemäß einem der vorhergehenden Ansprüche,
- die Steuerung (1*) des Ausleger-Arbeitsgerätes (1) so ausgebildet ist, dass sie die Stellelemente abhängig von den Signalen der Hindernis-Einheit (50) steuern kann.

13. **Verfahren** zum Herumführen eines Arbeitskopfes (2) auf der dem Trägerfahrzeug (7) zugewandten Innenseite um ein sich von vorne annäherndes Hindernis (H) mittels Verschwenken des Arbeitskopfes (2), insbesondere bei einem Ausleger-Arbeitsgerät (1) nach einem der vorhergehenden Ansprüche,
**dadurch gekennzeichnet, dass**
- die Querposition des Hindernisses (H) relativ zum Arbeitskopf (2) ermittelt wird,
- insbesondere auch die momentane Längs-Position des Hindernisses (H) zum Arbeitskopf (2), insbesondere dessen Taststange (51), ermittelt wird,
- die Vorwärts-Geschwindigkeit (v10) des Arbeitskopfes (2) ermittelt wird oder eingegeben wird oder vorgegeben wird,
- abhängig von diesen beiden Parametern und der Ausgangs-Schwenkstellung des Arbeitskopfes (2) Zeitpunkt und/oder Zeitdauer des ausgeschwenkten Zustandes und/oder Schwenkwinkel der Verschwenkung des Arbeitskopfes (2) um die aufrechte Schwenkachse (19) bestimmt wird und
- der Arbeitskopf (2) in Kenntnis der Relativ-Position des Hindernisses (H) durch Steuerung des Schwenkvorganges des Arbeitskopfes (2) möglichst eng um das Hindernis (H) herumgeführt wird und
- danach der Arbeitskopf (2) wieder in seine Ausgangs-Schwenkstellung zurück verschwenkt wird.

14. Verfahren nach Anspruch 13,
**dadurch gekennzeichnet, dass**
die Querposition des Hindernisses (H) mittels einer am vorderen Ende des Arbeitskopfes (2) schwenkbar um eine aufrechte Schwenkachse (51') beweglich befestigten und sich in der Aufsicht betrachtet quer zur Fahrtrichtung (10) erstreckenden Taststange (51) ermittelt wird, indem
- die Geschwindigkeit (v51) der Schwenkbewegung der Taststange (51) ab dem Kontaktieren des Hindernisses (H) ermittelt wird und
- unter Berücksichtigung der Vorwärts-Geschwindigkeit (v10) des Arbeitskopfes (2) daraus die Querposition des Hindernisses (H) ermittelt wird,
insbesondere die Geschwindigkeit (v51) der Schwenkbewegung der Taststange (51) ermittelt wird, indem
- der Schwenkwinkel pro Zeiteinheit um die aufrechte Achse (51') ermittelt wird oder
- der Zeitabstand zwischen zwei verschiedenen Schwenkstellungen der ausgelösten Taststange (51) und hieraus die Geschwindigkeit (v51) der Schwenkbewegung dazwischen ermittelt wird.

15. Verfahren nach einem der vorhergehenden Verfahrens-Ansprüche, **dadurch gekennzeichnet, dass**
als Vorwärts-Geschwindigkeit (v10)
- die Fahrgeschwindigkeit des Trägerfahrzeuges (7) festgelegt wird
oder
- zusätzlich dabei die zum Zeitpunkt der Ermittlung der Vorwärts-Geschwindigkeit (v10) stattfindende Bewegung des Arbeitskopfes (2) in oder entgegen der Fahrtrichtung (10) relativ zum Trägerfahrzeug (7) berücksichtigt wird.
(Hohen Bewuchs als elastisches Hindernis erkennen:)

16. Verfahren nach einem der vorhergehenden Verfahrens-Ansprüche, **dadurch gekennzeichnet, dass**
- ermittelt wird, ob sich die Taststange (51) in ihrem ausgelösten Zustand mindestens einmal, vorzugsweise mehrfach, entgegen ihrer Aktivierungs-Richtung wieder zurück bewegt in Fahrtrichtung (10),
- dies als Überfahren eines elastischen Hindernisses (H) gewertet wird,
- bei mehrfacher Zurückbewegung als in Fahrtrichtung (10) mehrfach vorhandenes elastisches Hindernis (H),
- insbesondere als Bewuchs, der bis auf die Höhe der Taststange (51) aufragt
und/oder
(Pfosten freimähen mittels Zusatz-Mähwerk:)
- bei einem am äußeren Ende des, insbesondere innen laufenden, Mähkopfes (2a) vorhandenen Zusatz-Mähwerk (26) der Mähkopf (2a), insbesondere wenn das Hindernis (H) in der äußeren Hälfte auf die Taststange (51) trifft, im Ganzen etwa in Querrichtung (11) nach innen verfahren wird statt verschwenkt zu werden,
- insbesondere mittels seines Auslegerarmes (3), um den Bewuchs um das Hindernis (H) herum mit dem Zusatz-Mähwerk (26) abzumähen.

17. Verfahren nach einem der vorhergehenden Verfahrens-Ansprüche, **dadurch gekennzeichnet, dass**
bei in regelmäßigen, insbesondere kurzen, Abständen sich nähernden Hindernissen (H), insbesondere den Tragpfosten von Leitplanken,
- automatisch ermittelt wird, ob der Auftreffpunkt auf der Taststange (51) in Querrichtung (11) bzw. Erstreckungsrichtung (20) von Hindernis zu Hindernis jeweils gleichbleibt oder in Querrichtung (11) bzw. Erstreckungsrichtung (20) abwandert und
- in Letzterem Fall der Mähkopf (2a) mittels seines Auslegerarmes (3) in Querrichtung (11) so verstellt wird, dass die Querposition des Auftreffpunktes gleichbleibt
und/oder
im Falle der Annäherung an ein im Boden versinkendes Leitplanken-Ende
- vom Bediener die automatische Nachführung des außen laufenden Arbeitskopfes (2b) vom innen laufenden Arbeitskopf (2a) deaktiviert wird,
- der innenlaufende Arbeitskopf (2a) rechtzeitig vor dem nach unten gerichteten Leitplanken-Ende in Querrichtung (11) nach innen herausgefahren wird, insbesondere durch Verschwenken des Auslegerarmes (3) um die Hochachse an seinem hinteren Ende (3b),
- hinter dem Ende der Leitplanke dieser Arbeitskopf (2a) wieder manuell in seine Ausgangsstellung gebracht wird,
- danach die automatische Nachführung des außen laufenden Arbeitskopfes (2b) vom innen laufenden Arbeitskopf (2a) wieder aktiviert wird.
